(19)

**Europäisches Patentamt**
**European Patent Office**
**Office européen des brevets**

(11) **EP 4 692 227 A1**

(12) **EUROPEAN PATENT APPLICATION**
published in accordance with Art. 153(4) EPC

(43) Date of publication:
**11.02.2026 Bulletin 2026/07**

(21) Application number: **24784896.3**

(22) Date of filing: **02.04.2024**

(51) International Patent Classification (IPC):
*C08L 29/04* (2006.01)    *B32B 27/20* (2006.01)
*B32B 27/28* (2006.01)    *B65D 65/40* (2006.01)
*C08K 3/11* (2018.01)

(52) Cooperative Patent Classification (CPC):
**B32B 27/20; B32B 27/28; B65D 65/40; C08K 3/11; C08L 29/04**

(86) International application number:
**PCT/JP2024/013539**

(87) International publication number:
**WO 2024/210111 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.04.2023 JP 2023062360**

(71) Applicant: **Mitsubishi Chemical Corporation Tokyo 100-8251 (JP)**

(72) Inventors:
- **ANABUKI Mizuki**
  **Tokyo 100-8251 (JP)**
- **SENO Ryuta**
  **Tokyo 100-8251 (JP)**

(74) Representative: **Hoffmann Eitle Patent- und Rechtsanwälte PartmbB Arabellastraße 30 81925 München (DE)**

(54) **ETHYLENE-VINYL ALCOHOL COPOLYMER COMPOSITION AND PRODUCTION METHOD THEREFOR, PELLET, MULTILAYER STRUCTURE, AND PRODUCTION METHOD THEREFOR**

(57)    Provided is a composition described below as an EVOH resin composition having an increased thermal decomposition temperature at the time of melt-molding and excellent thermal stability. An ethylene-vinyl alcohol copolymer composition containing an ethylene-vinyl alcohol copolymer and a titanium compound, wherein the ethylene-vinyl alcohol copolymer has a saponification degree of more than 91 mol% and 99.5 mol% or less, and a content of the titanium compound in terms of metal is 0.001 ppm or more and less than 5 ppm per mass of the ethylene-vinyl alcohol copolymer composition.

EP 4 692 227 A1

# EP 4 692 227 A1

## Description

### Technical Field

The present disclosure relates to an ethylene-vinyl alcohol copolymer composition and a method for producing the composition, pellets, a multilayer structure, a method for producing the multilayer structure, and various articles produced from the multilayer structure.

### Background Art

Ethylene-vinyl alcohol copolymers (hereinafter may be referred to as "EVOH resin") are excellent in transparency, gas barrier properties with respect to oxygen or the like, aroma retaining properties, solvent resistance, oil resistance, mechanical strength, and the like. The copolymers are molded into films, sheets, bottles, and the like, and are widely used as various packaging materials such as food packaging materials, pharmaceutical packaging materials, industrial drug packaging materials, and agrochemical packaging materials.

In particular, a resin composition containing an EVOH resin having a low saponification degree is widely used for a thermoformed container or the like as a resin composition having excellent transparency and secondary processability.

A heat-shrinkable multilayer film having at least one EVOH resin composition layer having a low saponification degree is excellent in stretchability, heat shrinkability, gas barrier properties, and transparency after heat shrinkage.

However, because the EVOH resin has a relatively active hydroxyl group in the molecule, the EVOH resin tends to easily degrade with heat, and improvement is required in terms of thermal stability, such as an increase in decomposition temperature in heating at the time of melt-molding.

To solve the above problem, for example, in JP 2005-068414 A, in an EVOH resin composition containing a specific amount of an alkali metal salt (A), a specific amount of a carboxylic acid or a salt thereof (C), and an EVOH resin having a saponification degree of from 80 to 99 mol%, an EVOH having a low saponification degree is used in applications where flexibility is regarded as being more important than gas barrier properties, because the EVOH having a low saponification degree is excellent in flexibility as compared with a normal EVOH having a high saponification degree. In particular, it is disclosed that a resin composition in which an EVOH having a low saponification degree is blended with an EVOH having a high saponification degree is widely used for a thermoformed container or the like as a resin composition having excellent transparency and secondary processability.

JP 2000-211068 A discloses that a heat-shrinkable multilayer film including at least one resin composition layer containing an EVOH having an ethylene content of from 20 to 60 mol% and a saponification degree of 98 mol% or less, in which the saponification degree of a vinyl acetate component is reduced by a re-acetylation method, is excellent in stretchability, heat shrinkability, gas barrier properties, and transparency after heat shrinkage.

JP 2004-24445 A discloses that a resin composition characterized by containing an ethylene-vinyl acetate copolymer saponified product (A) and an organic titanate (B) can suppress variations in thickness in a TD (width) direction at the time of film formation such as inflation molding, and discloses that 0.003 parts (0.0005 parts in terms of titanium) of tetra-i-propyl titanate (B) is used in Examples.

WO 2013/146961 A discloses that incorporation of an unsaturated aldehyde in an EVOH resin suppresses oxidative degradation at the time of melt-molding of the EVOH resin and suppresses coloring.

### Citation List

#### Patent Literature

JP 2005-068414 A
JP 2000-211068 A
JP 2004-24445 A
WO 2013/146961 A

### Summary

#### Technical Problem

However, in JP 2005-068414 A and JP 2000-211068 A, the low-saponification EVOH resin composition does not have sufficient thermal stability at the time of melt-molding or the like, and there is room for further improvement. In JP 2004-24445 A, when the EVOH resin composition contains titanium in an amount of 5 ppm, the decomposition reaction of the EVOH resin rapidly proceeds at a specific temperature. Thus, extrusion stability in extrusion molding tends to be low. In WO 2013/146961 A, an aldehyde compound such as an unsaturated aldehyde, even in a trace amount, may cause malodor, and there is a concern that the aldehyde compound volatilizes particularly in a molding step in which the compound is exposed to a high temperature and deteriorates the working environment. Thus, an EVOH resin composition that does not use such a volatile compound is required.

The present disclosure provides an EVOH resin composition that increases the thermal decomposition temperature of an EVOH resin at the time of melt-molding and is excellent in thermal stability.

Solution to Problem

In view of such circumstances, the present inventors have found that an EVOH resin composition in which thermal degradation of an EVOH resin at the time of melt-molding is suppressed can be produced by adding a specific small amount of a titanium compound to an EVOH resin having a low saponification degree.

That is, the present disclosure provides the following aspects.

[1] An ethylene-vinyl alcohol copolymer composition comprising an ethylene-vinyl alcohol copolymer and a titanium compound, wherein

the ethylene-vinyl alcohol copolymer has a saponification degree of more than 91 mol% and 99.5 mol% or less, and
a content of the titanium compound in terms of metal is 0.001 ppm or more and less than 5 ppm per mass of the ethylene-vinyl alcohol copolymer composition.

[2] The ethylene-vinyl alcohol copolymer composition according to [1], wherein the content of the titanium compound in terms of metal is 0.001 ppm or more and 0.9 ppm or less per mass of the ethylene-vinyl alcohol copolymer composition.
[3] A pellet containing the ethylene-vinyl alcohol copolymer composition according to [1] or [2].
[4] A multilayer structure comprising at least one layer comprising the ethylene-vinyl alcohol copolymer composition according to [1] or [2] or the pellet described in [3].
[5] A thermoformed container comprising the multilayer structure according to [4].
[6] A packaging film comprising the multilayer structure according to [4].
[7] A multilayer shrink film comprising the multilayer structure according to [4].
[8] A film capable of being used in a deep-drawing process, the film comprising the multilayer structure according to [4].
[9] A film capable of being used in agriculture, the film comprising the multilayer structure according to [4].
[10] A method for producing the ethylene-vinyl alcohol copolymer composition according to [1] or [2], the method comprising:
melt-mixing a composition raw material containing an ethylene-vinyl alcohol copolymer and a titanium compound.
[11] A method for producing the multilayer structure according to [4], the method comprising:
melt-molding a layer composed of the ethylene-vinyl alcohol copolymer composition.

Advantageous Effects of Invention

The EVOH resin composition of the present disclosure increases the thermal decomposition temperature of an EVOH resin at the time of melt-molding and is excellent in thermal stability.

Description of Embodiments

Hereinafter, the present disclosure will be described in more detail based on embodiments of the present disclosure, but the present disclosure is not limited to these embodiments.
In the present specification, unless otherwise specified, the expression "from X to Y" (X and Y are any numerals) includes the meaning of "X or more and Y or less" as well as the meaning of "preferably more than X" or "preferably less than Y".
In addition, when the expression "X or more" (X is any numeral) or "Y or less" (Y is any numeral) is used, the expression also includes the meaning of "preferably more than X" or "preferably less than Y".
In the present specification, for numerical ranges described stepwise, the upper limit value or the lower limit value of a numerical range of a certain step can be freely combined with the upper limit value or the lower limit value of a numerical range of another step. In addition, in a numerical range described in the present specification, the upper limit value or the lower limit value of the numerical range can be replaced with a value shown in Examples.

In the present specification, the term "film" includes "tape" and "sheet".

EVOH Resin Composition

An EVOH resin composition having a low saponification degree according to an embodiment of the present disclosure (hereinafter referred to as "the present EVOH resin composition") contains an EVOH resin having a low saponification degree as a main component and contains a specific small amount of a titanium compound.

That is, in the present EVOH resin composition, the base resin is an EVOH resin, and the content of the EVOH resin in the present EVOH resin composition is usually 70 mass% or more, preferably 80 mass% or more, more preferably 90 mass% or more, particularly preferably 95 mass% or more.

Hereinafter, the respective components will be described.

EVOH Resin

The EVOH resin used in the present disclosure is usually a resin that is produced by saponification of an ethylene-vinyl ester copolymer, which is a copolymer of ethylene and a vinyl ester monomer, and is a water-insoluble thermoplastic resin.

As the vinyl ester monomer, vinyl acetate is typically used from the viewpoint of good market availability and good impurity treatment efficiency during production. Examples of the vinyl ester monomer other than vinyl acetate include aliphatic vinyl esters such as vinyl formate, vinyl propionate, vinyl valerate, vinyl butyrate, vinyl isobutyrate, vinyl pivalate, vinyl caprate, vinyl laurate, vinyl stearate, and vinyl versatate, and aromatic vinyl esters such as vinyl benzoate. An aliphatic vinyl ester having usually from 3 to 20 carbons, preferably from 4 to 10 carbons, particularly preferably from 4 to 7 carbons is used. These compounds are usually used alone, but a plurality of compounds may be used simultaneously as necessary.

Copolymerization of the ethylene and the vinyl ester monomer can be performed by using any known polymerization method, for example, solution polymerization, suspension polymerization, or emulsion polymerization. In general, solution polymerization using methanol as a solvent is used. Saponification of the produced ethylene-vinyl ester copolymer can also be performed by a known method.

The EVOH resin thus produced is mainly composed of an ethylene-derived structural unit and a vinyl alcohol structural unit, and contains a small amount of a vinyl ester structural unit that remains without being saponified.

The content of the ethylene structural unit in the EVOH resin is usually from 20 to 60 mol%, preferably from 25 to 57 mol%, more preferably from 30 to 55 mol%, still more preferably from 35 to 53 mol%. The content of the ethylene structural unit can be controlled with the pressure of ethylene at the time of copolymerizing the vinyl ester monomer and ethylene. When the content is too low, secondary processability and flexibility tend to decrease, whereas when the content is too high, gas barrier properties tend to decrease.

The content of the ethylene structural unit can be measured based on ISO14663.

The saponification degree in the EVOH resin is more than 91 mol% and 99.5 mol% or less, preferably from 93 to 99.3 mol%, more preferably from 95 to 99 mol%. The lower limit value is preferably 96 mol% or more, most preferably 97 mol% or more. The saponification degree can be controlled with the amount, temperature, time, and the like of a saponification catalyst (usually, an alkaline catalyst such as sodium hydroxide is used) in saponification of the ethylene-vinyl ester-based copolymer. When the saponification degree is too low, gas barrier properties, thermal stability, moisture resistance, and the like tend to decrease.

The saponification degree of the EVOH resin can be measured by the following method.

Saponification Degree

About 50 mg of EVOH is weighed in a vial bottle, 1 mL of dimethyl sulfoxide-d6 (DMSO-d6) is added thereto, EVOH is dissolved through heating and stirring at 50°C, and NMR measurement is performed under the following conditions. Measurement Conditions

· Device name: superconducting nuclear magnetic resonance device "AVANCE **III** HD 400" available from Bruker Corporation
· Observation frequency: 400 MHz
· Solvent: DMSO-d6
· Polymer concentration: 5 w/v%
· Measurement temperature: 50°C
· Number of integrations: 16 times

Analysis Method

From the measured spectrum, the integrated value (11) of the peak of the chemical shift at 4.0-3.3 ppm and the integrated value (I2) of the peak of the chemical shift at 2.0 ppm are determined. Here, the peak of the chemical shift at 4.0-3.3 ppm is mainly derived from methine hydrogen adjacent to a hydroxy group, and the peak of the chemical shift at 2.0 ppm is derived from methyl hydrogen in an unsaponified vinyl acetate unit. From these integrated values, the saponification degree is calculated by the following formula.

## Formula

$$(3 \times I1)/\{(3 \times I1) + I2\} \times 100$$

The melt flow rate (MFR) (at 210°C and a load of 2160 g) of the EVOH resin is usually from 0.5 to 100 g/10 minutes, preferably from 1 to 50 g/10 minutes, particularly preferably from 3 to 35 g/10 minutes. When the MFR is too high, stability at the time of film formation tends to be impaired. When the MFR is too low, the viscosity tends to be too high, which leads to difficulty in melt extrusion.

The MFR is an index of the degree of polymerization of the EVOH resin, and can be adjusted with the amount of a polymerization initiator or the amount of a solvent when ethylene and a vinyl ester-based monomer are copolymerized.

The EVOH resin may further contain a structural unit derived from a comonomer described below within a range such that the effects of the present disclosure are not impaired (e.g., in an amount of 10 mol% or less of the EVOH resin).

Examples of the comonomer include olefins such as propylene, 1-butene, and isobutene; hydroxyl group-containing $\alpha$-olefins such as 3-buten-1-ol, 3-butene-1,2-diol, 4-penten-1-ol, and 5-hexene-1,2-diol, and derivatives thereof such as esterified products and acylated products thereof; hydroxyalkylvinylidenes such as 2-methylenepropane-1,3-diol and 3-methylenepentane-1,5-diol; hydroxyalkylvinylidene diacetates such as 1,3-diacetoxy-2-methylenepropane, 1,3-dipropionyloxy-2-methylenepropane, and 1,3-dibutyryloxy-2-methylenepropane; unsaturated acids such as acrylic acid, methacrylic acid, crotonic acid, phthalic acid (anhydride), maleic acid (anhydride), and itaconic acid (anhydride), salts thereof, or mono- or dialkyl esters thereof having an alkyl group with 1 to 18 carbons; acrylamides such as acrylamide, N-alkylacrylamides having an alkyl group with 1 to 18 carbons, N,N-dimethylacrylamide, 2-acrylamidopropane sulfonic acid or salts thereof, and acrylamidopropyldimethylamine or acid salts thereof, or quaternary salts thereof; methacrylamides such as methacrylamide, N-alkylmethacrylamides having an alkyl group with 1 to 18 carbons, N,N-dimethylmethacrylamide, 2-methacrylamidopropane sulfonic acid or salts thereof, and methacrylamidopropyldimethylamine or acid salts thereof, or quaternary salts thereof; N-vinylamides such as N-vinylpyrrolidone, N-vinylformamide, and N-vinylacetamide; vinyl cyanides such as acrylonitrile and methacrylonitrile; vinyl ethers having an alkyl group with 1 to 18 carbons, such as alkyl vinyl ethers, hydroxyalkyl vinyl ethers, and alkoxyalkyl vinyl ethers; halogenated vinyl compounds such as vinyl chloride, vinylidene chloride, vinyl fluoride, vinylidene fluoride, and vinyl bromide; vinyl silanes such as trimethoxyvinylsilane; halogenated allyl compounds such as allyl acetate and allyl chloride; allyl alcohols such as allyl alcohol and dimethoxyallyl alcohol; and comonomers such as trimethyl-(3-acrylamido-3-dimethylpropyl)-ammonium chloride and acrylamido-2-methylpropane sulfonic acid. These may be used alone or in combination of two or more types.

Among these, hydroxy group-containing $\alpha$-olefins are preferable, and 3-butene-1,2-diol and 5-hexene-1,2-diol are particularly preferable. When the hydroxy group-containing $\alpha$-olefin is copolymerized, the resulting EVOH resin has a primary hydroxyl group in a side chain. Such an EVOH resin having a primary hydroxyl group in a side chain, in particular, an EVOH resin having a 1,2-diol structure in a side chain is preferable from the viewpoint that secondary moldability is improved while gas barrier properties are maintained.

When the EVOH resin has a primary hydroxyl group in a side chain, the content of the structural unit derived from the monomer having a primary hydroxyl group is usually from 0.1 to 20 mol%, preferably from 0.5 to 15 mol%, particularly preferably from 1 to 10 mol% of the EVOH resin.

As the EVOH resin, a "post-modified" EVOH resin, such as an esterified, urethanized, acetalized, cyanoethylated, or oxyalkylenated EVOH resin, may also be used.

When the post-modified EVOH resin is used, the modification rate thereof is usually 10 mol% or less, preferably 4 mol% or less. When the modification rate of the EVOH resin is too high, the EVOH resin is likely to thermally degrade, and thermal stability tends to decrease.

Further, the EVOH resin may be a mixture of EVOH resins having different contents of ethylene structural units, saponification degrees, polymerization degrees, copolymerization components, and the like.

Titanium Compound

Examples of the titanium compound include inorganic titanium compounds and organic titanium compounds.

These titanium compounds may be used alone or in combination of two or more types. Among these, an inorganic titanium compound is preferable.

Examples of the inorganic titanium compound include titanium oxides, titanium hydroxides, titanium chlorides, and inorganic salts of titanium.

Examples of the titanium oxide include titanium(II) oxide, titanium(III) oxide, titanium(IV) oxide, and titanium suboxide.

Examples of the titanium hydroxide include titanium(III) hydroxide and titanium(IV) hydroxide.

Examples of the titanium chloride include titanium(III) chloride and titanium(IV) chloride.

Examples of the inorganic salt of titanium include titanium phosphate and titanium sulfate.

Among these, titanium oxides are preferable, titanium(IV) oxide is more preferable, rutile-type titanium(IV) oxide is particularly preferable.

Examples of the organic titanium compound include titanium carboxylates such as titanium acetate, titanium butyrate, and titanium stearate.

The titanium compound may be present as a titanium compound in the EVOH resin composition, or may be present in an ionized state or in a complex state in which the titanium compound interacts with the EVOH resin or another ligand.

The average particle size of the titanium compound is usually from 0.001 to 100 $\mu$m, preferably from 0.01 to 50 $\mu$m, more preferably from 0.015 to 20 $\mu$m. When the average particle size of the titanium compound is within the above range, the thermal stability effect tends to be excellent.

The content of the titanium compound in terms of metal is 0.001 ppm or more and less than 5 ppm per mass of the present EVOH resin composition. The content is preferably from 0.005 to 4 ppm, more preferably from 0.01 to 3 ppm, particularly preferably from 0.05 to 2 ppm. The upper limit value is preferably 0.9 ppm or less, most preferably 0.5 ppm or less. When the content of the titanium compound is within the above range, thermal decomposition at the time of melt-molding can be suppressed, and excellent thermal stability is achieved. When the content of the titanium compound is too small, the effect of suppressing thermal decomposition tends to decrease, whereas when the content is too large, the decomposition rapidly proceeds in a high temperature region, which tends to deteriorate the extrusion stability.

The content of the titanium compound in terms of metal can be determined by weighing the present EVOH resin composition in a platinum crucible, sequentially ashing the EVOH resin composition with a burner and an electric furnace, thermally decomposing the ashed product with nitric acid and hydrofluoric acid, treating the decomposed product with a mixed acid of dilute nitric acid and dilute hydrofluoric acid, and measuring the titanium in a constant volume liquid obtained by measuring the treated material into a constant volume by ICP mass spectrometry using an ICP mass spectrometer (Agilent 8800, available from Agilent Technologies).

In general, EVOH resins are thermally decomposed or colored because of thermal degradation. This is considered to be because the EVOH resin degrades with heat and generates radicals, the hydroxyl groups of the EVOH resin are dehydrated by the radicals to generate double bonds in the main chain of the EVOH resin, and such sites serve as reaction starting points to further promote dehydration, thereby forming a conjugated polyene structure in the main chain of the EVOH resin.

In contrast, the present EVOH resin composition contains a specific small amount of the titanium compound, and thus the thermal decomposition temperature of the EVOH resin is increased, and the EVOH resin composition has excellent thermal stability.

That is, it is presumed that titanium is stable in the form of a tetravalent ion, is coordinated to the double bond of the main chain of the EVOH resin as described above even in a small amount, and is stabilized by forming a chelate or the like, thereby suppressing formation of a polyene structure.

Additional Thermoplastic Resin

The present EVOH resin composition can contain a thermoplastic resin other than the EVOH resin within a range such that the effects of the present disclosure are not impaired (e.g., usually 30 mass% or less, preferably 20 mass% or less, particularly preferably 10 mass% or less of the present EVOH resin composition).

As the additional thermoplastic resin, a known thermoplastic resin can be used, and examples thereof include polyester-based resins, polystyrene-based resins, polyvinyl chloride-based resins, polycarbonate-based resins, ionomers, polyvinylidene chloride, polyester-based elastomers, polyurethane-based elastomers, chlorinated polyethylene, and chlorinated polypropylene. These may be used alone or in combination of two or more types.

Additional Blending Agent

The present EVOH resin composition may contain a blending agent generally blended in EVOH resins within a range such that the effects of the present disclosure are not impaired. Examples of the blending agent that may be blended include inorganic double salts (e.g., hydrotalcite), plasticizers (e.g., aliphatic polyhydric alcohols such as ethylene glycol, glycerin, and hexanediol), oxygen absorbers [e.g., inorganic oxygen absorbers such as aluminum powder and potassium sulfite; ascorbic acid, fatty acid esters and metal salts thereof, gallic acid, polyhydric phenols such as hydroxyl group-containing phenolaldehyde resins, terpene compounds, blends of tertiary hydrogen-containing resins and transition metals (e.g., a combination of polypropylene and cobalt), blends of carbon-carbon unsaturated bond-containing resins and transition metals (e.g., a combination of polybutadiene and cobalt), photo-oxidative degradation resins (e.g., polyketone), anthraquinone polymers (e.g., polyvinylanthraquinone), and polymer-based oxygen absorbers such as those obtained by adding photoinitiators (benzophenone and the like), antioxidants other than the above, and deodorants (activated carbon and the like) to these blended materials], heat stabilizers, light stabilizers, ultraviolet absorbers, colorants, antistatic agents, surfactants (excluding those used as lubricants), antibacterial agents, anti-blocking agents, and fillers (e.g., inorganic fillers). These compounds may be used alone or in combination of two or more types.

Method for Producing EVOH Resin Composition

The present EVOH resin composition can be produced by including a step of melt-mixing a composition raw material containing the EVOH resin and a titanium compound, and for example, can be produced by mixing by a dry blending method, a melt mixing method, a solution mixing method, an impregnation method, or the like. These production methods can be optionally combined.

Examples of the dry blending method include (i) a method of dry-blending a pellet-shaped EVOH resin and a titanium compound using a tumbler or the like.

Examples of the melt mixing method include (ii) a method of melt-kneading a dry blend obtained by dry-blending a pellet-shaped EVOH resin and a titanium compound, and (iii) a method of melt-kneading a titanium compound added to a molten EVOH resin.

Examples of the solution mixing method include (iv) a method of preparing a solution using a commercially available EVOH resin, blending a titanium compound therein, performing solidification molding, then performing solid-liquid separation with a known means, and drying the obtained product; and (v) a method of, in the process of producing an EVOH resin, incorporating a titanium compound in an ethylene-vinyl ester-based copolymer solution before saponification or a uniform solution of an EVOH resin (water/alcohol solution or the like), performing solidification molding, then performing solid-liquid separation with a known means, and drying the obtained product.

Examples of the impregnation method include (vi) a method of bringing a pellet-shaped EVOH resin into contact with an aqueous solution containing a titanium compound, incorporating the titanium compound in the EVOH resin, and then drying the EVOH resin.

As the aqueous solution containing a titanium compound, an aqueous solution of a titanium compound or an aqueous solution obtained by immersing a titanium compound in water containing various chemicals to elute titanium ions can be used.

In the impregnation method, the content of the titanium compound (in terms of metal) can be controlled with the concentration of the titanium compound in the aqueous solution in which the EVOH resin is immersed, the immersion temperature, the immersion time, and the like.

The immersion time is usually from 0.5 to 48 hours, preferably 1 to 36 hours, and the immersion temperature is usually from 10 to 40°C, preferably 20 to 35°C.

As the drying method in each of the above production methods, various drying methods can be employed, and either static drying or fluidized drying may be employed. These methods can be performed in combination.

As described above, in the present disclosure, the above different methods can be combined. Among those, a melt-mixing method is preferable, and the method (ii) is particularly preferable, from the viewpoint of productivity and obtaining a resin composition that exhibits more significant effects of the present disclosure. In the case of using the additional thermoplastic resin and the additional blending agent, they are blended by a common method according to the production method.

The present EVOH resin composition produced by each of the production methods described above may be in any form, but is preferably in the form of pellets.

The pellets may be in, for example, a spherical, oval, cylindrical, cubic, or rectangular parallelepiped shape, but are usually in an oval or cylindrical shape. From the viewpoint of convenience in the subsequent use as a molding material, oval pellets have a minor axis length of usually from 1 to 10 mm, preferably from 2 to 6 mm, more preferably from 2.5 to 5.5 mm, and a major axis length of usually from 1.5 to 30 mm, preferably from 3 to 20 mm, more preferably from 3.5 to 10 mm. In the case of cylindrical pellets, the bottom surface has a diameter of usually from 1 to 6 mm and preferably from 2 to 5 mm, and the length is usually from 1 to 6 mm and preferably from 2 to 5 mm.

The shape and size of the pellet-shaped EVOH resin used in each of the production methods are preferably the same.

The water content of the present EVOH resin composition is usually from 0.01 to 0.5 mass%, preferably from 0.05 to 0.35 mass%, particularly preferably from 0.1 to 0.3 mass%.

The water content of the present EVOH resin composition is measured and calculated by the following method.

The mass ($W_1$) of the present EVOH resin composition before drying is weighed with an electronic balance, the resin composition is dried in a hot air dryer at 150°C for 5 hours and then cooled in a desiccator for 30 minutes, and then the mass ($W_2$) after cooling was weighed. The water content is calculated from the following equation.

$$\text{Water content (mass\%)} = [(W_1 - W_2)/W_1] \times 100$$

When the present EVOH resin composition is in the form of pellets, preferably, a known lubricant is adhered to the surface of the pellets from the viewpoint of stabilizing the feed properties during melt-molding. Examples of the type of lubricant include higher fatty acids having 12 or more carbons (e.g., lauric acid, myristic acid, palmitic acid, stearic acid, behenic acid, and oleic acid), higher fatty acid esters (e.g., methyl esters, isopropyl esters, butyl esters, and octyl esters of higher fatty acids), higher fatty acid amides (e.g., saturated higher fatty acid amides, such as lauramide, myristamide, palmitamide, stearamide, and behenamide; unsaturated higher fatty acid amides, such as oleamide and erucamide; and bis higher fatty acid amides, such as ethylene bis(stearamide), ethylene bis(oleamide), ethylene bis(erucamide), and ethylene bis(lauramide)), low-molecular-weight polyolefins (e.g., low-molecular-weight polyethylene having a molecular weight of about 500 to 10000, or low-molecular-weight polypropylene, or acid-modified products thereof), higher alcohols having 6 or more carbons, ester oligomers, and ethylene fluoride resins. These compounds may be used alone or in combination of two or more types. The content of the lubricant is usually 5 mass% or less, preferably 1 mass% or less of the present EVOH resin composition. The lower limit is usually 0 mass%.

The present EVOH resin composition thus produced can suppress thermal degradation at the time of heating, and the 10% weight loss temperature of the present EVOH resin composition is usually 361°C or higher, preferably 365°C or higher, more preferably 370°C or higher.

The upper limit of the 10% weight loss temperature is preferably as high as possible, but is usually 450°C.

A difference of 1°C in the weight loss temperature appears as a large difference in yield in actual production, and thus the difference is very large.

The value obtained by subtracting the 5% weight loss temperature from the 10% weight loss temperature of the present EVOH resin composition is usually 9 or more, preferably 10 or more, more preferably 15 or more. The higher the value, the better the thermal stability. The upper limit of such a value is preferably as high as possible, but is usually 40.

The "5% weight loss temperature" and the "10% weight loss temperature" can be measured using a thermogravimetric apparatus, and for example, can be measured by a method described in Examples below.

The present EVOH resin composition thus produced is prepared into various forms such as a pellet, a powder form, or a liquid form, and is provided as a molding material for various molded products. In particular, in the present disclosure, when the composition is provided as a material for melt-molding, the effect of the present disclosure tends to be obtained more efficiently, which is preferable.

The present EVOH resin composition also includes a resin composition obtained by mixing resins other than the EVOH resin used in the present EVOH resin composition.

Examples of the molded product include a single layer film molded from the present EVOH resin composition, and a multilayer structure having a layer composed of the present EVOH resin composition.

Multilayer Structure

A multilayer structure according to an embodiment of the present disclosure (hereinafter referred to as "the present multilayer structure") includes a layer composed of the present EVOH resin composition. When the layer composed of the present EVOH resin composition (hereinafter referred to simply as "the present EVOH resin composition layer") is laminated with an additional substrate containing a thermoplastic resin other than the present EVOH resin composition as a main component (hereinafter, the resin used for the substrate may be abbreviated as "substrate resin"), strength can be further imparted, the present EVOH resin composition layer can be protected from the influence of moisture or the like, and other functions can be imparted.

Examples of the substrate resin include polyethylene-based resins such as linear low-density polyethylene, low-density polyethylene, ultra low-density polyethylene, medium-density polyethylene, high-density polyethylene, ethylene-propylene (block and random) copolymers, and ethylene-$\alpha$-olefin (an $\alpha$-olefin having from 4 to 20 carbons) copolymers; polypropylene-based resins such as polypropylene and propylene-$\alpha$-olefin (an $\alpha$-olefin having from 4 to 20 carbons) copolymers; polyolefin-based resins in a broad sense including (unmodified) polyolefin-based resins such as polybutene, polypentene, and polycyclic olefin-based resins (polymers having a cyclic olefin structure in at least one of the main chain and a side chain), and modified olefin resins such as unsaturated carboxylic acid-modified polyolefin-based resins in which any of these polyolefins is graft-modified with an unsaturated carboxylic acid or an ester thereof; ionomers; ethylene-vinyl acetate copolymers; ethylene-acrylic acid copolymers; ethylene-acrylate copolymers; polyester-based resins; polyamide-based resins (including copolymerized polyamide); polyvinyl chloride; polyvinylidene chloride; acrylic-based resins; polystyrene-based resins; vinyl ester-based resins; polyester-based elastomers; polyurethane-based elastomers; polystyrene-based elastomers; halogenated polyolefins such as chlorinated polyethylene and chlorinated polypropylene; and aromatic or aliphatic polyketones. These may be used alone or in combination of two or more types.

Among these, polyamide-based resins, polyolefin-based resins, polyester-based resins, and polystyrene-based resins, which are hydrophobic resins, are preferable. Polyolefin-based resins such as polyethylene-based resins, polypropylene-based resins, polycyclic olefin-based resins, and unsaturated carboxylic acid-modified polyolefin-based resins thereof are more preferable.

When the present EVOH resin composition layers are denoted by a (a1, a2, ...) and the substrate resin layers are denoted by b (b1, b2, ...), the layer configuration of the present multilayer structure may be any combination such as a/b, b/a/b, a/b/a, a1/a2/b, a/b1/b2, b2/b1/a/b1/b2, or b2/b1/a/b1/a/b1/b2. When a recycled layer containing a mixture of the present EVOH resin composition and a thermoplastic resin other than the present EVOH resin composition, which is obtained by remelt-molding an end, a defective product, or the like generated in the process of producing the multilayer structure, is denoted by R, the layer configuration can also be b/R/a, b/R/a/b, b/R/a/R/b, b/a/R/a/b, b/R/a/R/a/R/b, or the like. The number of layers of the present multilayer structure in terms of the total number is usually from 2 to 15 and preferably from 3 to 10. In the layer configuration described above, an adhesive resin layer containing an adhesive resin may be interposed between the layers as necessary.

As the adhesive resin, a known adhesive resin can be used, and the adhesive resin may be appropriately selected depending on the type of thermoplastic resin used for the substrate resin layer "b". Representative examples of the adhesive resin include carboxyl group-containing modified polyolefin-based polymers obtained by chemically bonding an unsaturated carboxylic acid or anhydride thereof to a polyolefin-based resin by addition reaction, a graft reaction, or the like. Examples of the carboxyl group-containing modified polyolefin-based polymer include modified polyethylene grafted with maleic anhydride, modified polypropylene grafted with maleic anhydride, a modified ethylene-propylene (block and random) copolymer grafted with maleic anhydride, a modified ethylene-ethyl acrylate copolymer grafted with maleic anhydride, a modified ethylene-vinyl acetate copolymer grafted with maleic anhydride, a modified polycyclic olefin-based resin grafted with maleic anhydride, and a modified polyolefin-based resin grafted with maleic anhydride. These may be used alone or in combination of two or more types.

In the present multilayer structure, when an adhesive resin layer is used between the present EVOH resin composition layer and the substrate resin layer, the adhesive resin layer is positioned on both sides of the present EVOH resin composition layer, and therefore the use of an adhesive resin having excellent hydrophobicity is preferable.

A known plasticizer, filler, clay (such as montmorillonite), colorant, antioxidant, antistatic agent, lubricant, nuclear material, anti-blocking agent, wax, or the like may be contained in the substrate resin and adhesive resin within a range such that the subject matter of the present disclosure is not impeded (e.g., usually 30 mass% or less, preferably 10 mass% or less relative to the total amount of the resin). These may be used alone or in combination of two or more types.

The present EVOH resin composition layer and the substrate resin layer described above can be laminated (including the case of interposing an adhesive resin layer) by a known method. For example, the present multilayer structure can be produced by including a step of melt-molding the present EVOH resin composition layer. Specific examples thereof include a method of melt-extrusion laminating the substrate resin to a film, a sheet, or the like of the present EVOH resin composition, a method of melt-extrusion laminating the present EVOH resin composition to the substrate resin layer, a method of co-extruding the present EVOH resin composition and the substrate resin, a method of dry laminating the present EVOH resin composition (layer) and the substrate resin (layer) using a known adhesive such as an organic titanium compound, an isocyanate compound, a polyester-based compound, or a polyurethane compound, and a method of applying a solution of the present EVOH resin composition onto the substrate resin and then removing the solvent. Among these methods, the co-extrusion method is preferable from the viewpoints of cost and the environment.

The present multilayer structure may be subjected to a stretching treatment (with heating) as necessary. The stretching treatment may be either uniaxial stretching or biaxial stretching. In the case of biaxial stretching, simultaneous stretching or sequential stretching may be performed. A stretching method with a high stretching ratio can be employed among a roll stretching method, a tenter stretching method, a tubular stretching method, a stretch blowing method, and vacuum-pressure molding. The stretching temperature is a temperature near the melting point of the multilayer structure and is selected from a range of usually from 40 to 170°C and preferably about from 60 to 160°C. When the stretching temperature is too low, the stretchability tends to be poor, whereas when the stretching temperature is too high, maintaining a stable stretched state tends to be difficult.

The present multilayer structure after the stretching treatment may be subjected to heat setting for the purpose of imparting dimensional stability. The heat setting can be carried out by a well-known means; for example, the stretch-treated present multilayer structure is heat-treated usually at 80 to 180°C, preferably at 100 to 165°C usually for about 2 to 600 seconds while the stretch-treated present multilayer structure is kept in a state of tension.

In the case of using the stretch-treated present multilayer structure as a shrink film (heat-shrinkable film), in order to impart heat shrinkability, the stretch-treated present multilayer structure is not subjected to the heat setting described above, but subjected to a treatment such as application of cool air to the present multilayer structure after the stretching treatment to cool-set the structure.

The thickness of the present multilayer structure (including a stretched multilayer structure), and the thicknesses of the present EVOH resin composition layer, the substrate resin layer, and the adhesive resin layer constituting the multilayer structure cannot be generally defined depending on the layer configuration, the type of the substrate resin, the type of the adhesive resin, the application, the packaging form, the required physical properties, and the like, but the thickness of the present multilayer structure (including a stretched multilayer structure) is usually from 10 to 5000 $\mu$m, preferably from 30 to 3000 $\mu$m, particularly preferably from 50 to 2000 $\mu$m. The thickness of the present EVOH resin composition layer is usually from 1 to 500 $\mu$m, preferably from 3 to 300 $\mu$m, particularly preferably from 5 to 200 $\mu$m, the thickness of the substrate resin layer is usually from 5 to 3000 $\mu$m, preferably from 10 to 2000 $\mu$m, particularly preferably from 20 to 1000 $\mu$m, and the thickness of the adhesive resin layer is usually from 0.5 to 250 $\mu$m, preferably from 1 to 150 $\mu$m, particularly preferably from 3 to 100 $\mu$m.

Further, the thickness ratio of the present EVOH resin composition layer to the substrate resin layer (the present EVOH resin composition layer/the substrate resin layer) in the present multilayer structure is usually from 1/99 to 50/50, preferably from 5/95 to 45/55, particularly preferably from 10/90 to 40/60, in terms of the ratio of the thickest layers to each other when there is a plurality of layers for each type of layer. The thickness ratio of the present EVOH resin composition layer to the adhesive resin layer (the present EVOH resin composition layer/the adhesive resin layer) in the present multilayer structure is usually from 10/90 to 99/1, preferably from 20/80 to 95/5, particularly preferably from 50/50 to 90/10, in terms of the ratio of the thickest layers to each other when there is a plurality of layers for each type of layer.

A multilayer container in a cup shape or a tray shape can also be produced using the present multilayer structure. In such a case, a draw molding method is usually employed, and specific examples include a vacuum molding method, a pressure molding method, a vacuum-pressure molding method, and a plug assist vacuum-pressure molding method. Further, in the case of producing a tube- or bottle-form multilayer container (laminate structure) from a multilayer parison (a hollow tubular preform before blowing), a blow molding method is employed. Specific examples include extrusion blow molding methods (such as a twin-head type, a mold moving type, a parison shift type, a rotary type, an accumulator type, and a horizontal parison type), a cold parison blow molding method, an injection blow molding method, and biaxial stretch blow molding methods (such as an extrusion cold parison biaxial stretch blow molding method, an injection cold parison biaxial stretch blow molding method, and an injection molding in-line biaxial stretch blow molding method). As necessary, the produced laminate may be subjected to processes such as heat treatment, cooling treatment, rolling, printing, dry lamination, solution or melt coating, bag-making, deep drawing, box processing, tube processing, and splitting.

A single layer film molded from the present EVOH resin composition or a container or lid material composed of the present multilayer structure, such as a bag, a cup, a tray, a tube, or a bottle is useful for various packaging materials and containers for general foods, seasonings such as mayonnaise and dressing, fermented foods such as miso, oil- and fat-based foods such as salad oil, beverages, cosmetics, pharmaceuticals, and the like.

Further, when the present multilayer structure is in the form of a film, the present multilayer structure is also useful as a material for thermoformed containers, packaging films, multilayer shrink films, films for use in a deep-drawing process, and films for agricultural use, because the present EVOH resin composition has excellent thermal stability.

Examples of the film for agricultural use include silage films and soil covering films.

Examples

Hereinafter, the present disclosure will be specifically described with reference to Examples. However, the present disclosure is in no way limited to the following Examples.

In the Examples, the terms "parts" means that values are based on mass unless otherwise specified.

Example 1

Pellets of an EVOH resin having an ethylene structural unit content of 38 mol% and a saponification degree of 98.5 mol% were used as the EVOH resin.

Titanium oxide (available from FUJIFILM Wako Pure Chemical Corporation) was used as a titanium compound.

The EVOH resin pellets were dry-blended with the titanium oxide in an amount of 0.1 ppm in terms of metal per mass of the EVOH resin composition to produce a mixture.

The mixture was supplied to a twin-screw extruder (20 mm$\varphi$) equipped with a two-hole die, extruded under the following extrusion conditions, and the discharged strand was cooled and solidified in a water tank. Subsequently, air was blown to the solidified strand to remove water droplets on the surface of the strand, and then the strand was cut to produce pellets of the EVOH resin composition.

Extrusion Conditions
Extruder set temperature (°C): C1/C2/C3/C4
=160/200/200/200

Example 2

Pellets of an EVOH resin composition were produced in the same manner as in Example 1, except that the blending amount of the titanium oxide was changed to 1 ppm in terms of metal per mass of the EVOH resin composition.

Example 3

Pellets of an EVOH resin composition were produced in the same manner as in Example 1, except that pellets of an EVOH resin having an ethylene structural unit content of 38 mol% and a saponification degree of 95.2 mol% were used.

Example 4

Pellets of an EVOH resin composition were produced in the same manner as in Example 1, except that pellets of an EVOH resin having an ethylene structural unit content of 44 mol% and a saponification degree of 97.6 mol% were used.

Example 5

Pellets of an EVOH resin composition were produced in the same manner as in Example 1, except that pellets of an EVOH resin having an ethylene structural unit content of 51 mol% and a saponification degree of 93.7 mol% were used.

Comparative Example 1

Pellets of an EVOH resin composition were produced in the same manner as in Example 1, except that no titanium oxide was used.

Comparative Example 2

Pellets of an EVOH resin composition were produced in the same manner as in Example 1, except that the blending amount of the titanium oxide was changed to 5 ppm in terms of metal per mass of the EVOH resin composition.

Comparative Example 3

Pellets of an EVOH resin composition were produced in the same manner as in Example 1, except that pellets of an EVOH resin having an ethylene structural unit content of 38 mol% and a saponification degree of 99.97 mol% were used.

Comparative Example 4

Pellets of an EVOH resin composition were produced in the same manner as in Example 1, except that pellets of an EVOH resin having an ethylene structural unit content of 38 mol% and a saponification degree of 91 mol% were used.

Comparative Example 5

Pellets of an EVOH resin composition were produced in the same manner as in Example 1, except that pellets of an EVOH resin having an ethylene structural unit content of 44 mol% and a saponification degree of 91 mol% were used.

The produced EVOH resin composition pellets of Examples 1 to 5 and Comparative Examples 1 to 5 were subjected to the following thermal stability evaluation. The results are shown in Table 1 below.

Thermal Stability Evaluation

Using 10 mg of the produced EVOH resin composition pellets, the temperature at the time when the weight decreased to 95% of the weight before measurement (5% loss temperature) and the temperature at the time when the weight decreased to 90% of the weight before measurement (10% loss temperature) were measured under the conditions of an airflow rate of 20 mL/min, a temperature rise rate of 10°C/min, and a temperature range from 50 to 550°C in a nitrogen atmosphere with a thermogravimetric apparatus (TA-60, available from Shimadzu Corporation), and a value obtained by subtracting the 5% loss temperature from the 10% loss temperature of the resin composition was determined. A higher value determined means that the decomposition of the resin composition is slower, and the higher the 10% loss temperature, the better the thermal stability is.

[Table 1]

| | EVOH resin | | Titanium amount [ppm] | 10% loss temperature [°C] | Thermal stability (10% loss temperature - 5% loss temperature) |
|---|---|---|---|---|---|
| | Ethylene structural unit amount [mol%] | Saponification degree [mol%] | | | |
| Example 1 | 38 | 98.5 | 0.1 | 366.1 | 14.1 |
| Example 2 | 38 | 98.5 | 1 | 363.9 | 9.9 |
| Example 3 | 38 | 95.2 | 0.1 | 362.8 | 20.3 |
| Example 4 | 44 | 97.6 | 0.1 | 376.6 | 13.5 |
| Example 5 | 51 | 93.7 | 0.1 | 378.4 | 14.3 |
| Comparative Example 1 | 38 | 98.5 | 0 | 360.2 | 13.4 |
| Comparative Example 2 | 38 | 98.5 | 5 | 363.6 | 8.6 |
| Comparative Example 3 | 38 | 99.97 | 0.1 | 353.9 | 15.9 |
| Comparative Example 4 | 38 | 91 | 0.1 | 331.9 | 13.1 |
| Comparative Example 5 | 44 | 91 | 0.1 | 355.1 | 18.9 |

From Table 1, it is found that the EVOH resin compositions of Examples 1 and 2 containing an EVOH resin having a low saponification degree and a specific small amount of a titanium compound have a 10% loss temperature higher than that of the EVOH resin composition of Comparative Example 1 containing no titanium compound. In the EVOH resin composition of Comparative Example 2 containing a titanium compound in an amount exceeding a specific range, the value obtained by subtracting the 5% loss temperature from the 10% loss temperature is small. This means that the resin composition is rapidly decomposed, and it is found that the extrusion stability in extrusion molding is insufficient.

In addition, it is found that, in Examples 3 to 5, in which the saponification degree is within the range of more than 91 mol% and 99.5 mol% or less, a high 10% loss temperature is exhibited, and thermal stability is excellent. In contrast, it is found that, in Comparative Examples 3 to 5, in which the saponification degree is outside the range of more than 91 mol% and 99.5 mol% or less, the 10% loss temperature is low, and degradation easily occurs with heat.

The multilayer structures including the layers composed of the EVOH resin compositions of the Examples also have excellent thermal stability. The multilayer structure including a layer composed of the present EVOH resin composition has excellent thermal stability and is therefore useful as a material for thermoformed containers, packaging films, multilayer shrink films, films for use in a deep-drawing process, and films for agricultural use.

Specific embodiments of the present disclosure have been described in the above examples, but the above examples are merely illustrative and are not to be construed as limiting. Various modifications apparent to those skilled in the art are intended to be within the scope of the present disclosure.

Industrial Applicability

The present EVOH resin composition has an increased thermal decomposition temperature at the time of melt-molding and is excellent in thermal stability. Thus, the present EVOH resin composition is useful as various packaging materials for various foods, seasonings such as mayonnaise and dressing, fermented foods such as miso, oil- and fat-based foods such as salad oil, cosmetics, and pharmaceuticals.

**Claims**

1.    An ethylene-vinyl alcohol copolymer composition comprising an ethylene-vinyl alcohol copolymer and a titanium compound, wherein

the ethylene-vinyl alcohol copolymer has a saponification degree of more than 91 mol% and 99.5 mol% or less, and

a content of the titanium compound in terms of metal is 0.001 ppm or more and less than 5 ppm per mass of the ethylene-vinyl alcohol copolymer composition.

2. The ethylene-vinyl alcohol copolymer composition according to claim 1, wherein the content of the titanium compound in terms of metal is 0.001 ppm or more and 0.9 ppm or less per mass of the ethylene-vinyl alcohol copolymer composition.

3. A pellet comprising the ethylene-vinyl alcohol copolymer composition according to claim 1 or 2.

4. A multilayer structure comprising at least one layer comprising the ethylene-vinyl alcohol copolymer composition according to claim 1 or 2, or the pellet according to claim 3.

5. A thermoformed container comprising the multilayer structure according to claim 4.

6. A packaging film comprising the multilayer structure according to claim 4.

7. A multilayer shrink film comprising the multilayer structure according to claim 4.

8. A film capable of being used in a deep-drawing process, the film comprising the multilayer structure according to claim 4.

9. A film capable of being used in agriculture, the film comprising the multilayer structure according to claim 4.

10. A method for producing the ethylene-vinyl alcohol copolymer composition according to claim 1 or 2, the method comprising:
melt-mixing a composition raw material containing an ethylene-vinyl alcohol copolymer and a titanium compound.

11. A method for producing the multilayer structure according to claim 4, the method comprising:
melt-molding a layer composed of the ethylene-vinyl alcohol copolymer composition.

## INTERNATIONAL SEARCH REPORT

| | |
|---|---|
| International application No. | |
| | **PCT/JP2024/013539** |

| | |
|---|---|
| **A.** | **CLASSIFICATION OF SUBJECT MATTER** |

*C08L 29/04*(2006.01)i; *B32B 27/20*(2006.01)i; *B32B 27/28*(2006.01)i; *B65D 65/40*(2006.01)i; *C08K 3/11*(2018.01)i
FI:  C08L29/04 S; C08K3/11; B32B27/28 102; B32B27/20 Z; B65D65/40 D

According to International Patent Classification (IPC) or to both national classification and IPC

| | |
|---|---|
| **B.** | **FIELDS SEARCHED** |

Minimum documentation searched (classification system followed by classification symbols)

C08L29/04; B32B27/20; B32B27/28; B65D65/40; C08K3/11

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| Y | JP 2016-029156 A (KURARAY CO., LTD.) 03 March 2016 (2016-03-03)<br>claims 1, 10, paragraphs [0002], [0033], [0042]-[0047], examples 1-4, tables 1, 2 | 1-11 |
| Y | JP 2002-146142 A (KURARAY CO., LTD.) 22 May 2002 (2002-05-22)<br>claims 1, 18, paragraphs [0002], [0037], [0041]-[0043], [0055], examples 1, 5, tables 2-4 | 1-11 |
| Y | JP 2001-98077 A (KURARAY CO., LTD.) 10 April 2001 (2001-04-10)<br>claim 1, paragraphs [0013], [0034]-[0037], [0042], [0051]-[0061], [0076]-[0077], [0085]-[0086], examples 1-6, tables 1, 3 | 1-11 |
| Y | JP 2019-163378 A (MITSUBISHI CHEMICAL CORPORATION) 26 September 2019 (2019-09-26)<br>claim 1, paragraphs [0007], [0070], examples 1-3, reference example 1, table 1 | 1-11 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **11 June 2024** | **25 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/013539**

| Patent document cited in search report | | | Publication date (day/month/year) | Patent family member(s) | Publication date (day/month/year) |
|---|---|---|---|---|---|
| JP | 2016-029156 | A | 03 March 2016 | (Family: none) | |
| JP | 2002-146142 | A | 22 May 2002 | (Family: none) | |
| JP | 2001-98077 | A | 10 April 2001 | (Family: none) | |
| JP | 2019-163378 | A | 26 September 2019 | (Family: none) | |

Form PCT/ISA/210 (patent family annex) (July 2022)

**REFERENCES CITED IN THE DESCRIPTION**

**Patent documents cited in the description**

- JP 2005068414 A
- JP 2000211068 A
- JP 2004024445 A
- WO 2013146961 A